# EUROPEAN PATENT APPLICATION

(11) **EP 2 594 437 A1**
(43) Date of publication of application: **22.05.2013**
(21) Application number: 11806460.9
(22) Date of filing: 07.07.2011
(51) Int. Cl.: B60R 16/033, H02J 7/14

(54) **POWER SUPPLY DEVICE FOR VEHICLE**

(30) Priority: 15.07.2010 JP 2010160381
(71) Applicant: Panasonic Corporation, Kadoma-shi Osaka 571-8501 (JP)
(72) Inventor: AKIMASA, Koji, Osaka 540-6207 (JP); WAGATSUMA, Masato, Osaka 540-6207 (JP)
(74) Representative: Vigand, Philippe
(86) International application number: PCT/JP2011/003891
(87) International publication number: WO 2012/008124

(57) **Abstract**

A vehicle power supply device is provided which is capable of improving fuel efficiency by lengthening a period of no-idling even if a main power supply thereof is deteriorated. The device is configured for use in a vehicle having an engine and a load, and includes an electric generator, a main power supply, a starter, a first switch, a power storage part, a second switch, and a control part. In the case of the main power supply being deteriorated, the control part causes the main power supply to supply electric power thereof to the load in the period of no-idling of the vehicle, and the control part controls, when the engine is restarted, such that the starter is driven on both the electric power of the main power supply and regenerative electric power of the power storage part, with the first switch being OFF and the second switch being ON.

## Description

### TECHNICAL FIELD

The present invention relates to vehicle power supply devices having a function of recovering regenerative electric power and a function of no-idling.

### BACKGROUND ART

In recent years, for fuel efficiency, vehicles have been developed which have a function of no-idling and a function of recovering regenerative electric power during their deceleration. The function of no-idling of such vehicles includes halting of their engines during a stop and restarting the engines for the vehicles to start, which allows fuel savings in a period of the engine halting.

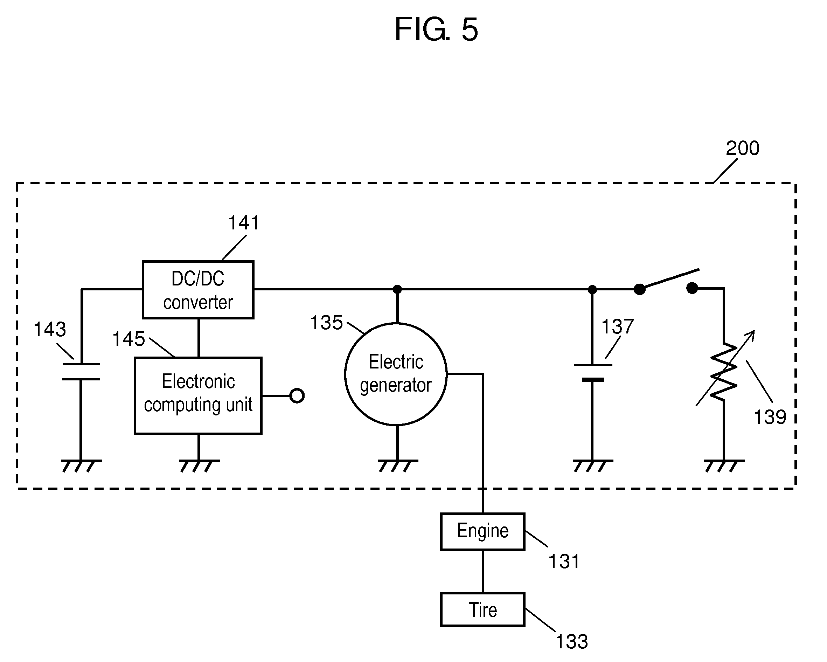

FIG. 5 is a schematic block diagram of a conventional vehicle power control device disclosed in Patent Literature 1. In FIG. 5, conventional vehicle power control device 200 includes electric generator 135, battery 137, vehicle electric load 139, DC/DC converter 141, electric double-layer capacitor 143, and electronic computing unit 145. Engine 131 of the vehicle is coupled mechanically with tires 133 and electric generator 135. Vehicle electric load 139 and battery 137 serving as a main power supply are coupled electrically with electric generator 135. Vehicle electric load 139 includes a starter. Electric double-layer capacitor 143 serving as a power storage part is coupled electrically with electric generator 135 via DC/DC converter 141. DC/DC converter 141 is controlled by electronic computing unit 145 serving as a control part.

Operations of conventional vehicle power control device 200 will be described. In a period of deceleration of the vehicle, electric generator 135 generates electric power to produce regenerative electric power. Electronic computing unit 145 controls DC/DC converter 141 such that electric double-layer capacitor 143 is charged with the regenerative electric power. As a result, the regenerative electric power is stored in electric double-layer capacitor 143. After that, when the vehicle ends the deceleration, electronic computing unit 145 controls DC/DC converter 141 such that the regenerative electric power stored in electric double-layer capacitor 143 is discharged, in preference to battery 137. As a result, the regenerative electric power stored in electric double-layer capacitor 143 is supplied to battery 137 and vehicle electric load 139, which allows effective utilization of the regenerative electric power. Therefore, fuel savings of the vehicle can be achieved to some extent. However, in regard to the function of no-idling, the period of no-idling becomes shorter as battery 137 deteriorates, which results in insufficient improvement of total fuel efficiency of the vehicle.

### Citation List

### Patent Literature

Patent Literature 1: Japanese Patent No. 3465293

### SUMMARY OF THE INVENTION

A vehicle power supply device according to the present invention is configured for use in a vehicle equipped with an engine and a load. The device includes an electric generator, a main power supply, a starter, a first switch, a power storage part, a second switch, and a control part. The electric generator generates electric power by using the engine. The main power supply is coupled electrically with the electric generator. The starter is coupled electrically with the main power supply. The first switch is coupled electrically with the main power supply. The load is coupled electrically with the main power supply via the first switch. The power storage part is coupled electrically with the first switch via a DC/DC converter. The second switch is coupled electrically between the main power supply and the power storage part. The control part is coupled electrically with the first switch, the DC/DC converter, and the second switch.

When the electric generator generates regenerative electric power, the control part turns the first switch ON, turns the second switch OFF, and controls the DC/DC converter such that the regenerative electric power is charged into the power storage part. When the vehicle is in a period of no-idling and the main power supply is not deteriorated, the control part controls DC/DC converter such that the power storage part, in preference to the main power supply, supplies the stored regenerative electric power to the load. In addition, before restarting the engine, the control part turns the first switch OFF such that the starter can be driven on the electric power from the main power supply to restart the engine. When the vehicle is in a period of no-idling and the main power supply is deteriorated, the control part controls such that the main power supply supplies electric power to the load. In addition, before restarting the engine, the control part turns the first switch OFF and turns the second switch ON such that the starter can be driven both on the electric power from the main power supply and on the regenerative electric power from the power storage part so as to restart the engine.

As a result, even if the main power supply is deteriorated, it is possible to supply the electric power from the main power supply to the load during the no-idling, resulting in a lengthened period of no-idling. Proportionately with this, it makes possible to provide the vehicle power supply device having the function of recovering the regenerative electric power, which is capable of improving fuel efficiency of the vehicle.

### BRIEF DESCRIPTION OF DRAWINGS

FIG. 1 is a block circuit diagram of a vehicl0e power supply device according to a first embodiment.
FIG. 2A is a flowchart illustrating operations of the vehicle power supply device during no-idling, according to the first embodiment.
FIG. 2B is a flowchart illustrating the operations of the vehicle power supply device during no-idling, according to the first embodiment.
FIG. 3 is a flowchart illustrating operations of the vehicle power supply device, during acceleration or constant-speed travelling, according to the first embodiment.
FIG. 4 is a graph showing a relation between a vehicle speed and a lower-limit discharge voltage of the vehicle power supply device according to the first embodiment.
FIG. 5 is a schematic block diagram of a conventional vehicle power control device.

### DESCRIPTION OF EMBODIMENTS

### (FIRST EXEMPLARY EMBODIMENT)

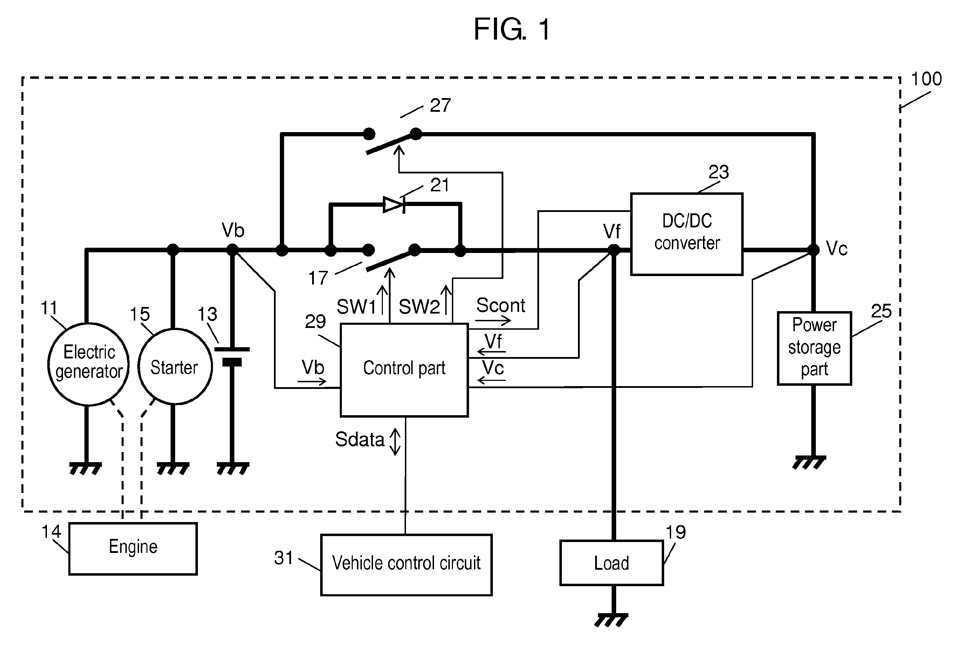

FIG. 1 is a block circuit diagram of vehicle power supply device 100 according to a first embodiment. In FIG. 1, vehicle power supply device 100 is configured for use in a vehicle equipped with engine 14 and load 19. Vehicle power supply device 100 includes electric generator 11, main power supply 13, starter 15, first switch 17, power storage part 25, second switch 27, and control part 29.

Electric generator 11 that generates electric power by using engine 14 of the vehicle is coupled electrically with main power supply 13 and starter 15. Main power supply 13 is configured with a secondary battery such as a lead storage battery. Starter 15 is coupled mechanically with engine 14, and starts engine 14. Main power supply 13 is coupled electrically with load 19 via first switch 17. Load 19 is electrical components installed in the vehicle. First switch 17 is configured capable of being subjected to external on-off control, and employs a field-effect transistor (referred to as FET, hereinafter) in the first embodiment. The FET includes parasitic diode 21 that is connected such that the anode of parasitic diode 21 is the main power supply 13 side. With this configuration, when first switch 17 is turned OFF, parasitic diode 21 prevents unnecessary reverse-current that flows from power storage part 25 to the main power supply 13 side. Note that a relay may be employed as first switch 17. In this case, since the relay can completely interrupt the electrical coupling between main power supply 13 and load 19, it is possible without parasitic diode 21 to prevent the unnecessary reverse-current.

First switch 17 is coupled electrically with power storage part 25 via DC/DC converter 23, in addition to load 19. DC/DC converter 23 controls charging and discharging of power storage part 25. When electric generator 11 generates regenerative electric power, DC/DC converter 23 works to charge power storage part 25 with the regenerative electric power. Moreover, when electric generator 11 generates no regenerative electric power, the converter works to discharge power storage part 25 in accordance with the state of the vehicle.

Power storage part 25 stores the regenerative electric power when the vehicle decelerates. In order to sufficiently store the regenerative electric power that is abruptly generated during the deceleration of the vehicle, power storage part 25 employs electric double-layer capacitors having a good charging acceptance property. The number of the electric double-layer capacitors and the mode of their electrical coupling (in series, parallel, or series parallel) are appropriately determined in accordance with a power specification required for the vehicle. In the first embodiment, five electric double-layer capacitors each having a rated voltage of 2.5 V are coupled in series with each other. That is, power storage part 25 can be charged until storage part voltage Vc rises up to 12.5 V. Hereinafter, this voltage is referred to as full-charge voltage Vcm. For avoiding overdischarge during the discharge, power storage part 25 is allowed to discharge until the voltage decreases down to 1 V per one electric double-layer capacitor, that is, the voltage of the storage part decreases down to 5 V. Hereinafter, this voltage is referred to as lowest storage-part voltage Vck. Therefore, power storage part 25 can be used within the range of storage part voltage Vc, i.e. from lowest storage-part voltage Vck (= 5 V) to full-charge voltage Vcm (= 12.5 V). DC/DC converter 23 controls storage part voltage Vc such that storage part voltage Vc does not go out the range.

Second switch 27 is electrically coupled between main power supply 13 and power storage part 25. Second switch 27 is controlled in accordance with an external on-off signal in the same manner as for first switch 17. Specifically, second switch 27 may employ an FET, a relay, or the like. In the first embodiment, second switch 27 employs a relay. As described later, a large current flows through second switch 27 when driving starter 15. In order to reduce a loss of voltage, no matter to how small it is, the relay with smaller internal resistance is employed for second switch 27.

First switch 17, DC/DC converter 23, and second switch 27 are coupled electrically with control part 29 via signal system interconnections. Control part 29 is configured with a microcomputer and peripheral circuits. Control part 29 performs the on-off control of first switch 17 by means of first on-off signal SW1. Control part 29 performs the on-off control of second switch 27 by means of second on-off signal SW2. Control part 29 controls DC/DC converter 23 by means of control signal Scont. Control part 29 has a function of sensing voltage. Control part 29 is electrically coupled, via signal system interconnections, with each of the positive terminal side of main power supply 13, the positive terminal side of load 19, and the positive terminal side of power storage part 25. Control part 29 senses voltages, i.e. main power supply voltage Vb of main power supply 13, load voltage Vf of load 19, and storage part voltage Vc of power storage part 25. Electric generator 11 is one in which, for example, an electromagnet is used in a field. It can be externally controlled whether or not electric generator 11 generates the electric power when engine 14 works.

Control part 29 is electrically coupled also with vehicle control circuit 31 via a signal system interconnection. Vehicle control circuit 31 controls the whole of the vehicle. The vehicle control circuit sends, to control part 29, signals that indicate various states of the vehicle by means of data signal Sdata in compliance with an in-vehicle communication standard. Moreover, the vehicle control circuit receives from control part 29 various information including voltages of various parts and operation status of DC/DC converter 23. Note that, although the control of electric generator 11 and starter 15 are performed by vehicle control circuit 31 via signal system interconnections, these interconnections are omitted in FIG. 1 for the sake of brevity.

Operations of vehicle power supply device 100 will be described.

When a driver performs braking operation, i.e. depressing of the brake pedal, during usual travelling of the vehicle so as to decelerate the vehicle, control part 29 receives data signal Sdata of the brake pedal from vehicle control circuit 31. Following the braking operation, control part 29 controls DC/DC converter 23 to charge power storage part 25 with the regenerative electric power generated by electric generator 11.

Specifically, control part 29 outputs first on-off signal SW1 and second on-off signal SW2 such that first switch 17 is turned ON and second switch 27 is turned OFF. Here, control part 29 turns second switch 27 OFF so as to allow the charging and discharging of power storage part 25 by means of DC/DC converter 23. When turning second switch 27 OFF, control part 29 turns first switch 17 ON so as to charge storage part 25 with the regenerative electric power generated by electric generator 11. Note that, in the first embodiment, first switch 17 employs the FET that is accompanied by parasitic diode 21. Therefore, without turning on first switch 17, electric generator 11 is able to charge the regenerative electric power into power storage part 25 via parasitic diode 21. However, an electric power loss occurs due to a voltage drop across parasitic diode 21. For this reason, first switch 17 is preferably turned ON even if first switch 17 is configured with the FET.

Next, in order to charge the regenerative electric power into power storage part 25, control part 29 reads in load voltage Vf applied to load 19. Then, the control part outputs control signal Scont to DC/DC converter 23 such that the voltage of the load 19 side terminal of DC/DC converter 23 becomes approximately 0.5 V to 1 V lower than load voltage Vf. The voltage (approximately 15 V) of electric generator 11 is applied to load 19 when the regenerative electric power is generated. However, since DC/DC converter 23 reduces the voltage of the load 19 side terminal thereof to be approximately 0.5 V to 1 V lower than load voltage Vf, the regenerative electric power is output to power storage part 25. This configuration allows a sufficient recovery of the regenerative electric power that is abruptly generated.

Although, in order to charge power storage part 25, DC/DC converter 23 reduces the voltage of the load 19 side terminal to be approximately 0.5 V to 1 V lower than load voltage Vf, the reduction width in voltage is not limited to 0.5 V to 1 V. However, if the voltage reduction width is excessively small, an influence of accuracy of sensing voltage and accuracy of operations of DC/DC converter 23 will become relatively large, resulting in possibly insufficient charging of power storage part 25. In contrast, if the voltage width is excessively large, the electric power not only from electric generator 11 but also from main power supply 13 is charged into power storage part 25, which forces main power supply 13 to discharge unnecessarily, resulting in an electric power loss. For these reasons, the voltage reduction width is preferably set to approximately 0.5 V to 1 V.

Control part 29 controls storage part voltage Vc as well. When storage part voltage Vc reaches full-charge voltage Vcm (= 12.5 V), control part 29 controls DC/DC converter 23 such that power storage part 25 is no longer charged in order to hold voltage Vc equal to full-charge voltage Vcm, even if the regenerative electric power is still being generated. The regenerative electric power that is generated after storage part voltage Vc of power storage part 25 has reached full-charge voltage Vcm, is supplied to load 19 and main power supply 13.

With the operation described above, the regenerative electric power generated during the deceleration of the vehicle is charged into power storage part 25. After storage part voltage Vc of power storage part 25 has reached full-charge voltage Vcm, control part 29 controls DC/DC converter 23 such that voltage Vc is held equal to full-charge voltage Vcm. If storage part voltage Vc did not reach full-charge voltage Vcm during the charging of power storage part 25, control part 29 controls DC/DC converter 23 such that storage part voltage Vc is held equal to voltage Vc at the point in time when the generation of regenerative electric power ends.

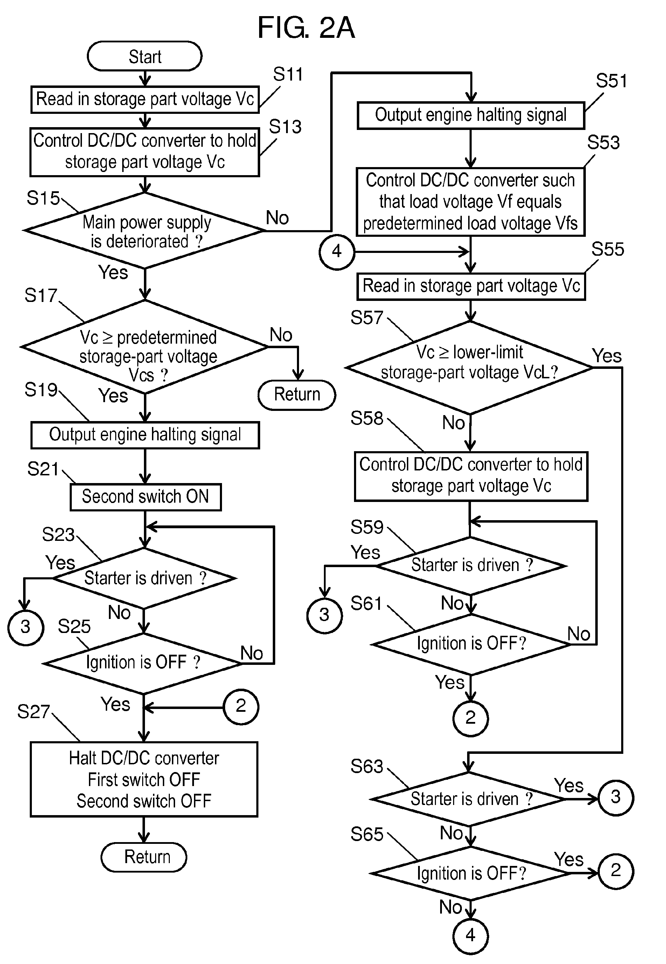

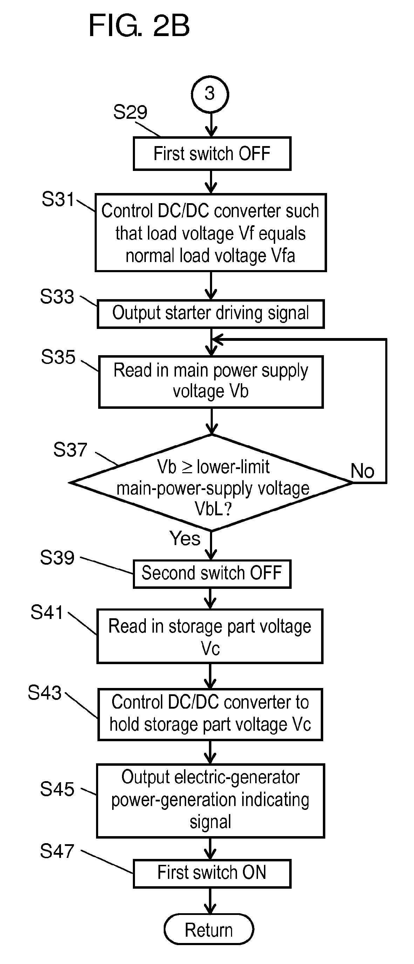

Next, operations of vehicle power supply device 100 after the vehicle begins to halt will be described, with reference to flowcharts of FIGS. 2A and 2B. Note that the flowcharts of FIGS. 2A and 2B are described as subroutines which are executed as needed through a main routine, not shown. Moreover, at the start of the flowchart of FIG. 2A, first switch 17 is in the ON state, while second switch 27 is in the OFF state.

Upon receiving halt information that indicates the halt of the vehicle by means of data signal Sdata from vehicle control circuit 31, control part 29 executes the subroutine of FIG. 2A through the main routine. Control part 29 starts by reading in storage part voltage Vc (Step S11). Next, control part 29 controls DC/DC converter 23 such that thus-read-in storage part voltage Vc is held (Step S13). Note that control part 29 performs the operation of Step S13 also during the deceleration described above, and continues to perform the operation even after the vehicle halts.

Control part 29 determines whether or not main power supply 13 is deteriorated (Step S15). Here, a method of determining the deterioration of main power supply 13 will be described.

If starter 15 is driven only by the secondary battery such as a lead storage battery configuring main power supply 13, main power supply voltage Vb of main power supply 13 drops abruptly to reach the minimum thereof in a short period of time. After that, upon restarting engine 14, main power supply voltage Vb of main power supply 13 gradually rises from the minimum to recover.

The deterioration of main power supply 13 entails a decrease in the minimum value of main power supply voltage Vb, with the minimum value appearing upon driving starter 15. The reason of this is as follows: Upon driving starter 15, a large electric current of approximately 400 A flows, which causes a drop in main power supply voltage Vb, in accordance with the magnitude of internal resistance of main power supply 13. On the other hand, as main power supply 13 deteriorates, the internal resistance of main power supply 13 becomes larger. The drop width of main power supply voltage Vb, which occurs upon driving starter 15, becomes larger with increasing internal resistance of main power supply 13 due to the deterioration. As a result, the minimum value of main power supply voltage Vb becomes smaller as main power supply 13 deteriorates.

Focusing on the properties of main power supply 13, control part 29 determines the minimum value of main power supply voltage Vb when starting to use the vehicle, that is, when starter 15 of the vehicle is driven by using an ignition switch. Control part 29 determines that main power supply 13 is deteriorated if the minimum value of main power supply voltage Vb is not larger than a predetermined deterioration determining value (e.g. 7 V). The determination result of deterioration is stored in a memory embedded in control part 29. Note that, as described later, the deterioration determining value is determined as a value which has a reserve capacity for the extent to which electric power can be supplied to load 19 during no-idling; therefore, the value is not one when the power supply is completely deteriorated. Therefore, since the deterioration determining value varies depending on a power consumption specification of load 19 and a specification of main power supply 13, the value may be appropriately determined in accordance with these specifications.

Note that the minimum value of main power supply voltage Vb is determined when starter 15 is driven on electric power from main power supply 13 at the beginning of use of the vehicle. This is because the fact that the state of deterioration of main power supply 13 can be more accurately known at the beginning of use of the vehicle, due to a small influence of heat generation caused by the charging and discharging of main power supply 13.

In Step S15, by the method described above, control part 29 determines whether or not main power supply 13 is deteriorated. If main power supply 13 is not deteriorated (No in Step S15), control part 29 performs the operation of Step S51 to be described later. In contrast, if main power supply 13 is deteriorated (Yes in Step S15), control part 29 compares storage part voltage Vc, that is read in Step S11, with predetermined storage-part voltage Vcs (Step S17). Here, predetermined storage-part voltage Vcs is storage part voltage Vc when power storage part 25 stores electric power enough to drive starter 15 after the no-idling. In the first embodiment, predetermined storage-part voltage Vcs is set to 12 V in advance. A specific example of this determination method will be described hereinafter.

First, the capacitance of power storage part 25 is set to 140 F (farad). Moreover, the electric current flowing from power storage part 25 via second switch 27 upon driving starter 15 is set to 300 A equal to three-fourths of the driving current (400 A) of starter 15. Note that the assumption that the current flowing from power storage part 25 is equal to three-fourths of the driving current is made based on the ratio (1:3) of internal resistance of power storage part 25 to that of main power supply 13. In the state where main power supply 13 is deteriorated, measurements of the internal resistance of main power supply 13 have shown that the measured internal resistance of main power supply 13 is approximately three times larger than the measured internal resistance of power storage part 25. Accordingly, when the electric power is supplied to starter 15 from both main power supply 13 and power storage part 25, the current from power storage part 25 to starter 15 is three times larger than that from main power supply 13 to starter 15. Then, the current flowing from power storage part 25 is 400 A × 3/4 = 300 A. Moreover, the period of driving starter 15 is set to 2 seconds, a somewhat larger estimation. Furthermore, storage part voltage Vc must be equal to at least lowest storage-part voltage Vck (=5 V) after driving starter 15.

Moreover, in the case of main power supply 13 being deteriorated, if starter 15 is driven only by main power supply 13 as described above, main power supply voltage Vb decreases down to 7 V. In the case of main power supply 13 being deteriorated, power storage part 25 as well supplies electric power to starter 15. Given these factors, experiments have shown that the minimum value of main power supply voltage Vb is approximately 8 V when starter 15 is driven on the electric power supplied from both deteriorated main power supply 13 and power storage part 25.

Based on those described above, voltage Vx needed for power storage part 25 is determined from an income and outgo of the energy. First, the energy of the discharge from power storage part 25 into starter 15 is 140 F × (Vx² - 8²)/2. Since this energy is equal to the energy (300 A × 8 V × 2 seconds) consumed by starter 15, then Vx ≈ 11.5 V. Consequently, predetermined storage-part voltage Vcs is here determined to be 12 V, in consideration of a margin.

If vehicle speed "v" of the vehicle is low before deceleration, the regenerative electric power cannot be sufficiently stored in power storage part 25. In Step S17, control part 29 compares predetermined storage-part voltage Vcs with storage part voltage Vc of power storage part 25 that stores the regenerative electric power. When storage part voltage Vc is lower than predetermined storage-part voltage Vcs (No in Step S17), performing of the no-idling highly likely renders engine 14 unable to be restarted. For this reason, when storage part voltage Vc is lower than predetermined storage-part voltage Vcs, control part 29 finishes the subroutine of FIG. 2A without performing the operation of no-idling, and returns to the main routine. Consequently, engine 14 remains in the working state.

On the other hand, the no-idling is performed when power storage part 25 stores electric power enough to restart engine 14 and storage part voltage Vc is not lower than predetermined storage-part voltage Vcs (Yes in Step S17). Specifically, control part 29 transmits a signal for halting engine 14, as data signal Sdata, to vehicle control circuit 31 (Step S19). Upon receiving data signal Sdata, vehicle control circuit 31 causes engine 14 to halt. Next, control part 29 outputs second on-off signal SW2 to turn second switch 27 ON (Step S21). With this operation, second switch 27 is turned ON, which causes power storage part 25 to be coupled in parallel with main power supply 13. Here, since engine 14 halts, electric generator 11 as well halts the generation of electric power. Therefore, main power supply voltage Vb becomes near an open-circuit voltage (approximately 12 V). On the other hand, when storage part voltage Vc is not lower than predetermined storage-part voltage Vcs in Step S17, control part 29 turns second switch 27 ON to cause the discharge until storage part voltage Vc becomes equal to main power supply voltage Vb. The electric power discharged from storage part voltage Vc is supplied mainly to load 19. However, since the upper limit of storage part voltage Vc is equal to full-charge voltage Vcm (= 12.5 V), storage part voltage Vc decreases only by approximately 0.5 V at the maximum. Therefore, a large part of the recovered regenerative electric power remains stored in power storage part 25, even if second switch 27 is turned ON. With this operation of the power system interconnections, the power supply to load 19 during the no-idling is performed by main power supply 13 that has capacitance an order of magnitude larger than power storage part 25, even if the power supply is deteriorated.

Next, control part 29 determines whether or not starter 15 is in the state of being driven (Step S23). From vehicle control circuit 31, control part 29 receives data signal Sdata indicating that the driver has changed the depression of pedal, from the brake pedal to the accelerator pedal. Control part 29 obtains information from data signal Sdata whether or not starter 15 is in the state of being driven to end the no-idling and to restart engine 14. If starter 15 is in the state of being driven (Yes in Step S23), control part 29 performs the operation of Step S29 to be described later.

On the other hand, if starter 15 is not in the state of being driven (No in Step S23), control part 29 reads in information on an ignition switch by means of data signal Sdata from vehicle control circuit 31, and then determines whether or not the ignition switch is in the OFF state (Step S25). If the ignition switch is not in the OFF state (No in Step S25), control part 29 returns to Step S23 and continues to hold the state of no-idling. In contrast, if the ignition switch is in the OFF state (Yes in Step S25), the use of the vehicle is ended; therefore, control part 29 halts DC/DC converter 23, turns both first switch 17 and second switch 27 OFF (Step S27), and returns to the main routine. With these operations, although the connections of the power system interconnections are cut off, load 19 that consumes dark current is supplied with electric power from main power supply 13 via parasitic diode 21.

The case where starter 15 is in the state of being driven in Step S23 (Yes in Step S23) will be described, with reference to the flowchart shown in FIG. 2B. When starter 15 is in the state of being driven, control part 29 turns first switch 17 OFF (Step S29). Next, control part 29 reads in load voltage Vf and controls DC/DC converter 23 such that load voltage Vf becomes equal to normal load voltage Vfa (Step S31). Hereinafter, the reason for performing these operations will be described.

Since second switch 27 is turned ON in Step S21 and first switch 17 is turned OFF in Step S29, main power supply 13 is coupled in parallel directly with power storage part 25 without via DC/DC converter 23. With this configuration, starter 15 is driven on electric power from both main power supply 13 and power storage part 25, as described later. At this time, both voltages of main power supply 13 and power storage part 25 decrease greatly. Since the electric power to load 19 is supplied from main power supply 13 via parasitic diode 21, load voltage Vf as well greatly decreases as the voltage of main power supply 13 decreases. It does not matter if load 19 meets specifications that the load is capable of being sufficiently working even when subjected to the voltage decrease associated with the driving of starter 15. However, common electrical components will halt their operation when load voltage Vf decreases to approximately 10 V, for example. Hence, in order to keep load 19 in operation even when starter 15 is driven, control part 29 performs the operation of Step S31 such that a part of the regenerative electric power of power storage part 25 is subjected to voltage step-up with DC/DC converter 23, and is then supplied to load 19. Note that normal load voltage Vfa is a normal voltage that is required for continuously driving of load 19 and is set to 12 V in the first embodiment. Therefore, load voltage Vf is then 12 V. When driving starter 15, since starter 15 is supplied with the electric power from power storage part 25, main power supply voltage Vb decreases to approximately 8 V as described above. However, parasitic diode 21 as well is OFF because first switch 17 is OFF, the cathode side of parasitic diode 21 is 12 V (load voltage Vf), and the anode side is approximately 8 V (main power supply voltage Vb). Accordingly, load 19 is applied with load voltage Vf that is stabilized with DC/DC converter 23, without being subjected to an influence of variations in main power supply voltage Vb.

Note that the operations of Step S29 and Step S31 may be performed in reverse order. In this regard, when first switch 17 is configured with the relay, the operations of Step S29 and Step S31 must be performed in reverse order for holding the power supply to load 19 because of the absence of parasitic diode 21. In this case, both first switch 17 and second switch 27 are ON at the same time even though it is only a moment. However, main power supply voltage Vb is equal to the open-circuit voltage (approximately 12 V) as described above and load voltage Vf becomes equal to normal load voltage Vfa (= 12 V) with DC/DC converter 23; therefore, both voltages are very close to each other. Accordingly, even if there exists the moment when both first switch 17 and second switch 27 are ON at the same time, the possibility of flowing of an overcurrent is small. For this reason, it may be configured that the relay is employed for first switch 17 and the operations of Step S29 and Step S31 are performed in reverse order.

With the operations up to Step S31, since preparation for driving starter 15 is completed, control part 29 outputs data signal Sdata for driving starter 15 to vehicle control circuit 31 (Step S33). Upon receiving the signal, vehicle control circuit 31 drives starter 15. At this time, since main power supply 13 and power storage part 25 are coupled in parallel with each other as described above, the both supply electric power to starter 15. Since the ratio of the internal resistance of power storage part 25 to the internal resistance of deteriorated main power supply 13 is 1 to 3, 100 A of current flows from main power supply 13 and 300 A of current flows from power storage part 25, for a peak current (400 A) of starter 15. Prior to the deterioration of main power supply 13, the peak current of 400 A flows only from main power supply 13. After the deterioration of main power supply 13, since it is controlled to require only 100 A of current from the main power supply, starter 15 can be driven even if main power supply 13 is deteriorated. With this configuration, because the vehicle is capable of undergoing no-idling even if main power supply 13 is deteriorated, it is possible to proportionately reduce the fuel consumption, which allows fuel savings.

Next, control part 29 reads in main power supply voltage Vb (Step S35), and then compares it with lower-limit main-power-supply voltage VbL (Step S37). Here, lower-limit main-power-supply voltage VbL is a lower limit of voltage at which load 19 can be driven by main power supply 13. Normally, as described above, lower-limit main-power-supply voltage VbL should be approximately 10 V at which load 19 halts. However, at the point in time of Step S37, first switch 17 is OFF and parasitic diode 21 is coupled between main power supply 13 and load 19. Therefore, lower-limit main-power-supply voltage VbL is determined to be 11 V, in consideration of a margin and an influence of a voltage drop due to parasitic diode 21. Accordingly, when main power supply voltage Vb is lower than lower-limit main-power-supply voltage VbL (No in Step S37), starter 15 is consuming a large current with load 19 being unable to be operated by main power supply 13, and engine 14 is yet to be restarted. Consequently, since electric generator 11 as well does not work, the control part returns to Step S35, in order to continue the supplying of electric power from power storage part 25 to load 19 via DC/DC converter 23.

On the other hand, when the restart of engine 14 is about to reach completion and the consumption of electric current by starter 15 decreases, the voltage of main power supply 13 rises. When main power supply voltage Vb rises to return to be not lower than lower-limit main-power-supply voltage VbL (Yes in Step S37), it becomes possible to supply the electric power from main power supply 13 to load 19. Therefore, control part 29 causes load 19 to be supplied with the electric power from main power supply 13, instead of the power from power storage part 25. Specifically, this operation is as follows.

First, control part 29 turns second switch 27 OFF (Step S39). This disengages the parallel coupling between power storage part 25 and main power supply 13. Next, control part 29 reads in storage part voltage Vc (Step S41) and controls DC/DC converter 23 such that storage part voltage Vc at present is held (Step S43). The operation of Step S43 halts the control of load voltage Vf by DC/DC converter 23. At this time, as described above, since main power supply voltage Vb has returned to be not lower than lower-limit main-power-supply voltage VbL, the operation of Step S43 causes load 19 to be supplied with the electric power from main power supply 13 instead of the power from power storage part 25. Moreover, the operation of Step S43 prevents the charging from electric generator 11 into power storage part 25. Consequently, it makes it possible to eliminate the waste that the electric power generated by engine 14 via fuel consumption is charged vainly into power storage part 25. Moreover, if power storage part 25 is charged when engine 14 is restarted, there is a case where the regenerative electric power to be subsequently generated cannot be sufficiently recovered. Therefore, with the operation of Step S43, not-performing of the charging from electric generator 11 into power storage part 25 allows a reduction in the probability of insufficient recovery of the regenerative electric power.

Having completed the operations up to Step S43, the preparation for electric generator 11 to start generating electric power is completed. Upon the completion of the preparation for electric generator 11 to start generating the electric power, control part 29 outputs to vehicle control circuit 31 a signal as data signal Sdata that directs electric generator 11 to generate the electric power (Step S45). Upon receiving data signal Sdata, vehicle control circuit 31 controls electric generator 11 to generate the electric power. After that, control part 29 turns first switch 17 ON (Step S47). With this configuration, the electric power from electric generator 11 is supplied to load 19, with the loss caused by parasitic diode 21 being reduced. With the operations so far performed, the no-idling is ended and the vehicle becomes capable of travelling. Control part 29 ends the subroutine of FIG. 2B, and returns to the main routine.

The operations from Step S19 to Step S47 described above are ones of vehicle power supply device 100 during the no-idling when main power supply 13 is deteriorated. The features of the operations are summarized as follows: Control part 29 causes main power supply 13 to supply the electric power thereof to load 19 during the no-idling. Prior to the restarting of engine 14, control part 29 turns first switch 17 OFF and second switch 27 ON, and controls such that starter 15 is driven on both the electric power from main power supply 13 and the regenerative electric power of power storage part 25 so as to restart engine 14. Of the large electric current consumed by starter 15, the electric current supplied from main power supply 13 decreases in terms of the ratio thereof to the large current, which makes it possible to restart engine 14 even when main power supply 13 is deteriorated. As a result, the no-idling of the vehicle is improved in terms of the increased number of times of the no-idling and the lengthened period of the no-idling, which allows a reduction in fuel consumption, leading to improved fuel efficiency.

Operations will be described for the case where main power supply 13 is not deteriorated, i.e. No in Step S15. In this case, control part 29 starts by transmitting a signal for halting engine 14, as data signal Sdata, to vehicle control circuit 31. This operation is the same as for Step S19. Upon receiving data signal Sdata, vehicle control circuit 31 causes engine 14 to halt, which starts the no-idling.

Next, control part 29 controls DC/DC converter 23 such that read-in load voltage Vf becomes equal to predetermined load voltage Vfs (Step S53). Predetermined load voltage Vfs is the voltage that is predetermined such that the regenerative electric power stored in power storage part 25 during the no-idling can be supplied to load 19. Specifically the voltage is determined as follows.

Because electric generator 11 halts during the no-idling, it is necessary to supply load 19 with the electric power either from main power supply 13 or from power storage part 25. At the point in time of Step S53, since it is determined that main power supply 13 is not deteriorated, main power supply 13 supplies the electric power thereof for driving starter 15 after the no-idling, while load 19 is supplied with the regenerative electric power as much as possible. The reason for this is as follows. Since main power supply 13 is not deteriorated and is capable of sufficiently driving starter 15, the regenerative electric power stored in power storage part 25 is intended to be consumed as early as possible, resulting in effective utilization of the regenerative electric power. If the vehicle is braked with the electric power of power storage part 25 remaining insufficiently discharged, the already-stored regenerative electric power cannot be effectively utilized. Moreover, power storage part 25 is unable to recover not all of the regenerative electric power to be newly generated during the braking of the vehicle. Therefore, the total efficiency of utilization of the regenerative electric power becomes lower. In the first embodiment, when main power supply 13 is not deteriorated, power storage part 25, in preference to main power supply 13, supplies the electric power thereof to load 19. Then, in order to supply the electric power to load 19 from power storage part 25 in preference to main power supply 13, it is necessary to control DC/DC converter 23 such that load voltage Vf becomes higher than main power supply voltage Vb. Here, during the no-idling, main power supply voltage Vb is approximately 12 V equal to the open-circuit voltage of the secondary battery such as a lead storage battery, as described above. In order to make load voltage Vf higher than 12 V, predetermined load voltage Vfs is determined to be 13 V in consideration of a margin such as control error of DC/DC converter 23.

With these operations, the regenerative electric power stored in power storage part 25 is supplied to load 19 via DC/DC converter 23.

Next, control part 29 reads in storage part voltage Vc (Step S55), and then compares it with lower-limit storage-part voltage VcL (Step S57). Here, lower-limit storage-part voltage VcL is the lower limit of storage part voltage Vc that is necessary for power storage part 25 to supply the electric power thereof to load 19, in order not to halt the operation of load 19 during the driving of starter 15 after the no-idling. Lower-limit storage-part voltage VcL is determined as follows.

To begin with, as described above, lower-limit storage-part voltage VcL is 13 V. After having driven starter 15, it is necessary that storage part voltage Vc be equal to at least lowest storage-part voltage Vck (= 5 V). In addition, the capacitance of power storage part 25 is 140 F as described above, and it is assumed that the period of driving starter 15 is 2 seconds and the electric current consumed by load 19 is 10 A during the no-idling. From an income and outgo of the energy discharged from power storage part 25 to load 19 and the energy consumed by load 19, it follows that 140 F × (VcL² - 5²)/2 = 10 A × 13 V × 2 seconds. Solving the equation yields VcL = 5.4 V. That is, lower-limit storage-part voltage VcL should be not lower than 5.4 V. In the first embodiment, lower-limit storage-part voltage VcL is determined to be 6 V, in consideration of a margin such as error in sensing voltage.

In Step S57, if storage part voltage Vc is lower than lower-limit storage-part voltage VcL (No in Step S57), control part 29 controls DC/DC converter 23 such that storage part voltage Vc that is read in Step S55 is held (Step S58) in order not to discharge power storage part 25 anymore. As a result, since load voltage Vf is no longer controlled by DC/DC converter 23, load 19 is supplied with the electric power from main power supply 13.

Next, control part 29 determines whether or not starter 15 is in the state of being driven (Step S59). The operation of Step S59 is the same as of Step S23. If starter 15 is in the state of being driven (Yes in Step S59), control part 29 performs the operations of Step S29 and subsequent ones described above so as to restart engine 14. An important point in this case is that, when main power supply 13 is not deteriorated, second switch 27 remains turned OFF. Therefore, since first switch 17 is turned OFF in Step S29, both first switch 17 and second switch 27 are turned OFF in the operations of Step S29 and subsequent ones. Accordingly, when starter 15 is driven in Step S33, only the electric power from main power supply 13 is supplied to starter 15. At this time, DC/DC converter 23 works in Step S31 such that load voltage Vf becomes equal to normal load voltage Vfa; therefore, only the electric power from power storage part 25 is supplied to load 19 during the driving of starter 15, which allows stable operation of load 19. Moreover, at this time, since storage part voltage Vc is equal to at least lower-limit storage-part voltage VcL, power storage part 25 stores the regenerative electric power enough to be supplied to load 19 even in the period (2 seconds) of driving starter 15.

On the other hand, if starter 15 is not in the state of being driven (No in Step S59), control part 29 determines whether or not the ignition switch is in the OFF state (Step S61). The operation of Step S61 is the same as of Step S25. If the ignition switch is not OFF (No in Step S61), the control part returns to Step S59 and repeats the subsequent operations, in order to continue the state of no-idling. In contrast, if the ignition switch is OFF (Yes in Step S61), control part 29 performs the operation of Step S27 so as to end the use of the vehicle.

In Step S57, if storage part voltage Vc is not lower than lower-limit storage-part voltage VcL (Yes in Step S57), control part 29 determines whether or not starter 15 is in the state of being driven (Step S63). This operation is the same as that of Step S23. If starter 15 is in the state of being driven (Yes in Step S63), control part 29 performs the operations of Step S29 and subsequent ones for restarting engine 14 described above. This operation is the same as that for the case of Yes in Step S59.

In contrast, if starter 15 is not in the state of being driven (No in Step S63), control part 29 determines whether or the ignition switch is in the state of OFF (Step S65). This operation is the same as of Step S25. If the ignition switch is not OFF (No in Step S65), control part 29 returns to Step S55 and repeats the subsequent operations in order to continue the state of the no-idling. In contrast, if the ignition switch is OFF (Yes in Step S65), control part 29 performs the operation of Step S27 to end the use of the vehicle.

The operations from Step S51 to Step S65 described above are ones of vehicle power supply device 100 during the no-idling when main power supply 13 is not deteriorated. The futures of the operations are summarized as follows. Control part 29 controls DC/DC converter 23 such that, in preference to main power supply 13, power storage part 25 supplies to load 19 the regenerative electric power charged thereinto. Prior to the restarting of engine 14, control part 29 turns first switch 17 OFF and controls such that starter 15 is driven on the electric power from main power supply 13 so as to restart engine 14. When main power supply 13 is not deteriorated and is capable of sufficiently driving starter 15, the regenerative electric power stored in power storage part 25 is consumed as early as possible during the no-idling. With this configuration, the regenerative electric power having already been stored in power storage part 25 can be effectively utilized, and more amount of the regenerative electric power to be newly generated can be recovered. Therefore, this makes it possible to reduce the amount of fuel consumption, resulting in improved fuel efficiency.

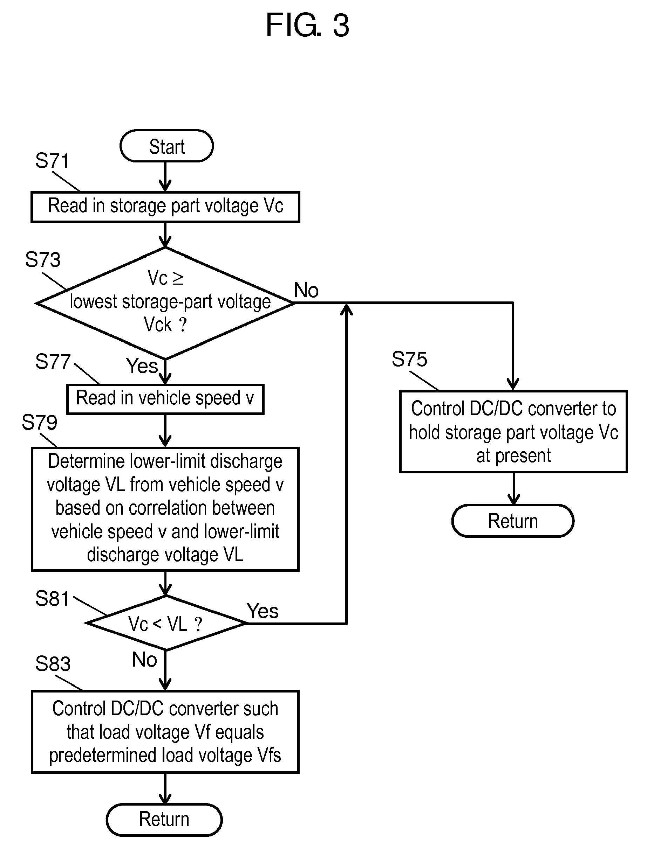

Operations of the vehicle during acceleration or constant-speed travelling will be described with reference to a flowchart of FIG. 3. Note that the flowchart of FIG. 3 as well is a subroutine which is executed through the main routine, in the same manner as those of FIGS. 2A and 2B.

When the no-idling ends and the vehicle is in acceleration or in constant-speed travelling, information on this is transmitted by means of data signal Sdata from vehicle control circuit 31 to control part 29. Upon receiving data signal Sdata, control part 29 executes the subroutine of FIG. 3 through the main routine. Note that, at this time, first switch 17 is in the ON state while second switch 27 is in the OFF state. When the subroutine of FIG. 3 is executed, control part 29 starts by reading in storage part voltage Vc (Step S71), and compares lowest storage-part voltage Vck (= 5 V) with storage part voltage Vc (Step S73). If storage part voltage Vc is not higher than lowest storage-part voltage Vck (No in Step S73), control part 29 controls DC/DC converter 23 such that storage part voltage Vc at present which is read in Step S71 is held, in order not to discharge power storage part 25 anymore (Step S75). With this operation, power storage part 25 is capable of recovering the regenerative electric power as much as possible during the braking of the vehicle. After that, the control part ends the subroutine of FIG. 3 and returns to the main routine.

On the other hand, if storage part voltage Vc is higher than lowest storage-part voltage Vck (Yes in Step S73), control part 29 controls such that power storage part 25 discharges the electric power thereof in order to allow power storage part 25 to recover the regenerative electric power as much as possible. However, depending on vehicle speed "v" of the vehicle, there is a possibility that control part 29 is unable to sufficiently recover the regenerative electric power during the braking. Then, if main power supply 13 is deteriorated, the electric power of power storage part 25 is sometimes not enough to sufficiently drive starter 15 after the no-idling. Consequently, in the first embodiment, main power supply voltage Vb capable of being discharged is varied depending on vehicle speed "v." The specific operation of this will be described hereinafter.

First, control part 29 reads in vehicle speed "v" from data signal Sdata transmitted from vehicle control circuit 31 (Step S77). Next, control part 29 determines lower-limit discharge voltage VL from vehicle speed "v" based on a predetermined correlation between vehicle speed "v" and lower-limit discharge voltage VL of power storage part 25 (Step S79). Note that the correlation is stored in the memory.

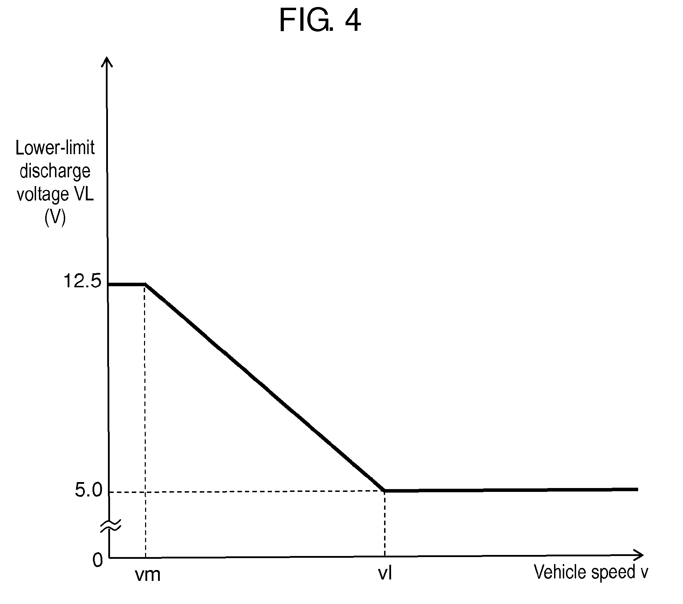

The correlation between vehicle speed "v" and lower-limit discharge voltage VL is shown in FIG. 4. Note that, in FIG. 4, the horizontal axis represents vehicle speed "v" and the vertical axis represents lower-limit discharge voltage VL. The correlation between vehicle speed "v" and lower-limit discharge voltage VL is such that lower-limit discharge voltage VL is set equal to full-charge voltage Vcm (= 12.5 V) because vehicle speed "v" is so low that the regenerative electric power cannot be obtained, when vehicle speed "v" is not higher than minimum regenerable vehicle speed "vm" (e.g. 10 km/h). Accordingly, if vehicle speed "v" is unable to yield the regenerative electric power, power storage part 25 is controlled not to discharge at this point in time. When vehicle speed "v" is higher than minimum regenerable vehicle speed "vm" and not higher than maximum dischargeable vehicle speed "v1" (e.g. 60 km/h), the correlation is such that, the higher vehicle speed "v" is, the lower lower-limit discharge voltage VL is. Accordingly, since a large amount of regenerative electric power is obtained when vehicle speed "v" is high, power storage part 25 is controlled to discharge proportionately with an excess of storage part voltage Vc over lower-limit discharge voltage VL that is determined based on the correlation between vehicle speed "v" and lower-limit discharge voltage VL. With this configuration, the regenerative electric power stored in power storage part 25 can be effectively utilized. In addition, when the next braking is made, all of the regenerative electric power can be recovered without fail, resulting in efficient utilization of the regenerative electric power.

When vehicle speed "v" exceeds maximum dischargeable vehicle speed "v1," lower-limit discharge voltage VL is set equal to the constant value of lowest storage-part voltage Vck (= 5 V). With this configuration, if the electric power stored in power storage part 25 is discharged down to lowest storage-part voltage Vck, power storage part 25 can be charged up to full-charge voltage Vcm at the next braking, which thereby results in the most effective utilization of power storage part 25. Note that minimum regenerable vehicle speed "vm" and maximum dischargeable vehicle speed "v1" are nothing more than examples, and they may be appropriately optimally determined in accordance with specifications of the vehicle. Moreover, the correlation of FIG. 4 is not limited to the combination of linear relationships, and the correlation may be determined in advance as an optimal correlation (including a curvilinear relation and a relation with rounded knees, for example) in accordance with the specification of the vehicle. The correlation is stored in control part 29.

Consequently, in Step S79 of FIG. 3, control part 29 determines lower-limit discharge voltage VL from both the correlation of FIG. 4 and vehicle speed "v," and compares it with storage part voltage Vc obtained in Step S71 (Step S81). If storage part voltage Vc is lower than lower-limit discharge voltage VL (Yes in Step S81), control part 29 performs the operation of Step S75 described above, in order not to discharge power storage part 25 anymore. In contrast, if storage part voltage Vc is not lower than lower-limit discharge voltage VL (No in Step S81), the electric power of power storage part 25 can be discharged to load 19. Therefore, control part 29 controls DC/DC converter 23 such that load voltage Vf becomes equal to predetermined load voltage Vfs (= 13 V) (Step S83). Note that the operation of Step S83 is the same as of Step S53 of FIG. 2A. With this operation, in preference to main power supply 13, power storage part 25 supplies the electric power thereof to load 19, resulting in effective utilization of the regenerative electric power. After that, control part 29 ends the subroutine of FIG. 3 and returns to the main routine. Note that, through performing the operation of Step S83, storage part voltage Vc decreases with time and vehicle speed "v" either increases with time or becomes constant. Consequently, the main routine repeatedly executes the subroutine of FIG. 3 during either acceleration or constant-speed travelling of the vehicle, and control part 29 controls the discharge of power storage part 25 such that storage part voltage Vc becomes optimal.

The futures of the operations during either acceleration or constant-speed travelling described above can be summarized as follows. During either acceleration or constant-speed travelling of the vehicle, control part 29 determines lower-limit discharge voltage VL from vehicle speed "v" based on the predetermined correlation between vehicle speed "v" and lower-limit discharge voltage VL of power storage part 25. When thus-determined lower-limit discharge voltage VL is lower than storage part voltage Vc of power storage part 25 which is sensed by control part 29, control part 29 controls DC/DC converter 23 such that the regenerative electric power of power storage part 25 is supplied to load 19 until storage part voltage Vc reaches lower-limit discharge voltage VL.

With the above configurations and operations, when main power supply 13 is deteriorated, the regenerative electric power charged in power storage part 25 is used only for driving starter 15. This makes it possible to supply the electric power from main power supply 13 to load 19 during the no-idling, which secures a lengthened period of the no-idling. Consequently, vehicle power supply device 100 can be realized with the function of recovering the regenerative electric power which is capable of improving fuel efficiency of the vehicle.

According to conventional vehicle power control device 200 shown in FIG. 5, it is surly possible to effectively utilize regenerative electric power. However, when conventional vehicle power control device 200 is used in a no-idling vehicle, since the deceleration of the vehicle has ended during no-idling, vehicle electric load 139 is supplied firstly with electric power of electric double-layer capacitor 143 and then with electric power of battery 137. Accordingly, if battery 137 is deteriorated, it is necessary to drive a starter on the electric power remaining in battery 137 immediately after finishing the discharge of electric double-layer capacitor 143. Not working in this manner, if the no-idling continues as usual with battery 137 supplying the electric power thereof to vehicle electric load 139, battery 137 will be so deficient in electric power that the starter cannot be sufficiently driven, which possibly makes the engine unable to be restarted. As a result, when battery 137 is deteriorated, the period of no-idling becomes shorter, resulting in an insufficient improvement in fuel efficiency.

According to vehicle power supply device 100, when main power supply 13 is deteriorated, the regenerative electric power charged in power storage part 25 is used only for driving starter 15. Therefore, even if deteriorated main power supply 13 supplies the electric power thereof to load 19 during the no-idling, starter 15 that abruptly consumes a large electric current is supplied mainly with the regenerative electric power of power storage part 25 via second switch 27, i.e. not via DC/DC converter 23 having a large loss. This allows starter 15 to be sufficiently driven.

Note that, in the first embodiment, control part 29 controls DC/DC converter 23 such that the regenerative electric power of power storage part 25 is supplied to load 19 when driving starter 15. However, the above operation is not necessarily performed when load 19 meets a specification that permits continued operations thereof even if a voltage drop occurs during driving starter 15.

Moreover, in the first embodiment, the control of storage part voltage Vc is performed in accordance with vehicle speed "v" by using the correlation of FIG. 4. However, it is not necessary to perform the control of storage part voltage Vc in accordance with vehicle speed "v," when the battery capacity of power storage part 25 is so large that electric power can always be stored therein independently of vehicle speed "v," with the stored power being enough to sufficiently drive starter 15 even if main power supply 13 is deteriorated. Note, however, that power storage part 25 is preferably configured to have optimal battery capacity, because the battery capacity greater than needed leads to higher costs.

Moreover, in the first embodiment, the determination of the deterioration of main power supply 13 is made at starting the use of the vehicle, based on the minimum value of main power supply voltage Vb when starter 15 is driven on the electric power of main power supply 13. However, the determination is not limited to the method. For example, for a vehicle that always measures the state of charging of main power supply 13, the determination of the deterioration of main power supply 13 may be made based on the state of charging thereof. Note, however, that the measurement of the state of charging requires integration of the current by using a current sensor which is set in main power supply 13. Therefore, for the case where vehicle control circuit 31 does not include a function of measuring the state of charging, the determination of the deterioration can be more easily made based on the minimum value of main power supply voltage Vb, as described in the first embodiment, than based on the measured state of charging.

### (SECOND EXEMPLARY EMBODIMENT)

As the configuration of a vehicle power storage device according to a second embodiment is the same as that shown in FIG. 1, detail description thereof is omitted. A feature of the second embodiment lies in the point that the operation of engine 14 at initial starting thereof. Details on the point will be described.

At starting to use the vehicle, when main power supply 13 is deteriorated, there is a possibility that starter 15 cannot be driven only with main power supply 13 to perform the initial starting of engine 14. Information on whether or not main power supply 13 is deteriorated was stored in the memory of control part 29 at the preceding use of the vehicle. Based on the information stored in the memory, when main power supply 13 is deteriorated, control part 29 turns first switch 17 OFF and second switch 27 ON prior to the initial starting of engine 14, and then controls such that starter 15 is driven on both the power of main power supply 13 and the power of power storage part 25 to perform the initial starting of engine 14. With this configuration, even if main power supply 13 is deteriorated, engine 14 can be more reliably started.

In this way, when main power supply 13 is deteriorated, starter 15 is driven on both the power of main power supply 13 and the power of power storage part 25 at the initial starting of the vehicle as well as after no-idling. With this configuration, it is possible to suppress a large electric current that is abruptly drawn from main power supply 13, resulting in a reduced load on main power supply 13. As a result, even with main power supply 13 being deteriorated, it is possible to lengthen the period of the no-idling, resulting in improved fuel efficiency.

Note that, since the operations after the initial starting of engine 14 are the same as those in the first embodiment, descriptions thereof are omitted.

The operation of driving starter 15 on both the power of main power supply 13 and the power of power storage part 25 is effective also at the initial starting of the vehicle provided that the regenerative electric power sufficiently remains in power storage part 25, with the power being stored at the preceding use of the vehicle. However, if the regenerative electric power has been naturally discharged because of the vehicle being unused for a long period, at the moment when second switch is turned ON, a large current flows in a short period from main power supply 13 to power storage part 25 due to a voltage difference between storage part voltage Vc and main power supply voltage Vb. This possibly causes second switch 27 to be broken. Hence, in the second embodiment, in consideration of the occurrence of natural discharge, when main power supply 13 is deteriorated, control part 29 reads in storage part voltage Vc prior to the initial starting of engine 14. If storage part voltage Vc is lower than predetermined initial voltage Vci, control part 29 turns first switch 17 ON and second switch 27 OFF in advance, and controls DC/DC converter 23 such that the electric power from main power supply 13 is charged into power storage part 25 until storage part voltage Vc reaches predetermined initial voltage Vci. After that, when the charging causes storage part voltage Vc to reach predetermined initial voltage Vci, control part 29 halts the charging by using DC/DC converter 23, turns first switch 17 OFF and second switch 27 ON from their states described above, and then performs the operations of Step S33 and subsequent ones of FIG. 2B. This operation allows a reduction in the possibility of second switch 27 being broken.

Here, a method of determining predetermined initial voltage Vci will be described. As described above, second switch 27 passes 300 A of electric current when starter 15 is driven. Therefore, second switch 27 employs the relay that has a rated current (for example, 1000 A in consideration with a safety factor of 3 and a margin) with which the relay is not broken even if it is subjected to 300 A of electric current at the maximum. Moreover, the open-circuit voltage of main power supply 13 is 12 V. Accordingly, for preventing the flowing of electric current not less than 300 A upon turning second switch 27 ON, it is required that (12 V - Vci)/20 mΩ = 300 A, where Vci is the predetermined initial voltage of power storage part 25 and the sum of the internal resistance of power storage part 25 and the internal resistance of deteriorated main power supply 13 is assumed to be approximately 20 mΩ. Solving the equation yields that Vci = 6 V. Consequently, as long as storage part voltage Vc is not lower than 6 V (= predetermined initial voltage Vci), the maximum current does not excess 300 A even if second switch 27 is turned directly ON, which allows a very low possibility of second switch 27 being broken. In this way, predetermined initial voltage Vci can be determined. From the above, predetermined initial voltage Vci is determined to be 6 V in the second embodiment.

For the above reasons, when main power supply 13 is deteriorated and engine 14 is initially started, control part 29 starts by turning first switch 17 ON and second switch 27 OFF if storage part voltage Vc is lower than predetermined initial voltage Vci (= 6 V). Next, control part 29 controls DC/DC converter 23 such that the electric power of main power supply 13 is charged into power storage part 25 until storage part voltage Vc reaches predetermined initial voltage Vci. After that, control part 29 turns first switch 17 OFF and second switch 27 ON, and then drives starter 15 on both the electric power of main power supply 13 and the electric power of power storage part 25.

In these operations, assume that the vehicle has been left unused for a long period and power storage part 25 has discharged to lowest storage-part voltage Vck (= 5 V). In order to initially charge power storage part 25 up to predetermined initial voltage Vci, DC/DC converter 23 is expected to supply 1 kW of electric power from main power supply 13 to power storage part 25 for initial charging period "ti." Initial charging period "ti" can be determined from the equation, that is, 140 F × (62 - 52)/2 = 1 kW × ti. This gives that ti ≈ 0.8 second. Since predetermined initial voltage Vci is 6 V, storage part voltage Vc is 6 V after the initial charging. Since the open-circuit voltage of main power supply 13 is 12 V, when first switch 17 is turned OFF and second switch 27 is turned ON after the completion of the initial charging by DC/DC converter 23, 300 A of electric current at the maximum flows from main power supply 13 to power storage part 25 as described above. After that, storage part voltage Vc rises abruptly at first and then gradually exponentially, due to the time constant caused by the sum of internal resistance (20 mΩ) and the capacitance of 140 F. In the case according to the second embodiment, storage part voltage Vc becomes 11.2 V after 5.6 seconds. With this operation, storage part voltage Vc becomes close to main power supply voltage Vb, and then control part 29 drives starter 15. Note, however, that, main power supply voltage Vb is slightly higher than storage part voltage Vc. Therefore, the ratio of the current supplied from main power supply 13 to starter 15 to the current from power storage part 25 is out of the ratio of 1:3 described in the first embodiment. That is, the ratio of main power supply 13 becomes slightly larger. Consequently, although the load on main power supply 13 becomes slightly larger only during the initial starting of engine 14, the influence of this on the development of deterioration of main power supply 13 is negligible.

With this operation, the total initial charging period is approximately 6.4 seconds that is required for charging power storage part 25 up to the voltage capable of driving the starter, from the beginning of the initial charging. The period is such that, for example, if the charging is started at the same time when a driver unlocks the door of the vehicle, the charging can be sufficiently completed by the time of driving starter 15.

With the above configurations and operations, when main power supply 13 is deteriorated, starter 15 is driven on both the electric power of main power supply 13 and the electric power of power storage part 25, not only after the no-idling but also at the initial starting of engine 14 upon starting to use the vehicle. This allows a further suppression of the large electric current that is abruptly drawn from main power supply 13, resulting in a reduced load on main power supply 13. Consequently, even with deteriorated main power supply 13, it is possible to lengthen the period of the no-idling, which thereby allows vehicle power supply device 100 with the function of recovering the regenerative electric power capable of improving fuel efficiency.

Note that, in the second embodiment, although predetermined initial voltage Vci is set to 6 V, it may be appropriately determined in accordance with power specifications of DC/DC converter 23, or the like. Moreover, predetermined initial voltage Vci may be set to 12 V equal to the open-circuit voltage. In this case, since DC/DC converter 23 charges power storage part 25 up to 12 V, the load on main power supply 13 during driving starter 15 can be reduced to the minimum. However, it takes DC/DC converter 23 approximately 8.3 seconds to charge power storage part 25 up to 12 V even if charging with a power of 1 kW, which increases the total initial charging period until starter 15 is driven. Moreover, the power consumption as well of DC/DC converter 23 becomes larger proportionately with the increase in the total initial charging period. Therefore, comparing to this, it is preferable to adopt the configuration according to the second embodiment (predetermined initial voltage Vci is determined to be 6 V, the lowest possible) in which storage part voltage Vc can be charged almost equal to main power supply voltage Vb and the total initial charging period becomes shorter.

Note that, in the first and second embodiments, although power storage part 25 employs the electric double-layer capacitor, the storage part may employ other capacitors including an electrochemical capacitor.

### INDUSTRIAL APPLICABILITY

The vehicle power supply device according to the present invention is capable of improving fuel efficiency by lengthening the period of no-idling even if main power supply thereof is deteriorated. Accordingly, in particular, the device is useful as the vehicle power supply device having functions of no-idling and recovering regenerative electric power.

### REFERENCE MARKS IN THE DRAWINGS

| | |
|---|---|
| 11 | electric generator |
| 13 | main power supply |
| 14 | engine |
| 15 | starter |
| 17 | first switch |
| 19 | load |
| 23 | DC/DC converter |
| 25 | power storage part |
| 27 | second switch |
| 29 | control part |

## Claims

1. A vehicle power supply device configured for use in a vehicle equipped with an engine and a load, the device comprising:
an electric generator generating electric power by using the engine;
a main power supply coupled electrically with the electric generator;
a starter coupled electrically with the main power supply;
a first switch coupled electrically with the main power supply;
a power storage part coupled electrically with the first switch via a DC/DC converter;
a second switch coupled electrically between the main power supply and the power storage part; and
a control part coupled electrically with the first switch, the DC/DC converter, and the second switch,
the load being coupled electrically with the main power supply via the first switch, the control part controlling the DC/DC converter to charge regenerative electric power into the power storage part with the first switch being turned ON and the second switch being turned OFF when the electric generator generates the regenerative electric power,
wherein,
when the vehicle is in a period of no-idling and the main power supply is not deteriorated, the control part controls the DC/DC converter such that, in preference to the main power supply, the regenerative electric power charged into the power storage part is supplied to the load, and the control part drives the starter on electric power of the main power supply such that the starter restarts the engine with the first switch being turned OFF before restarting the engine, and
wherein
when the vehicle is in the period of no-idling and the main power supply is deteriorated, the control part supplies the electric power of the main power supply to the load, and the control part drives the starter both on the electric power of the main power supply and on the regenerative electric power of the power storage part such that the starter restarts the engine with the first switch being turned OFF and the second switch being turned ON before restarting the engine.

2. The vehicle power supply device according to claim 1, wherein
the control part, when driving the starter, controls the DC/DC converter such that the regenerative electric power of the power storage part is supplied to the load.

3. The vehicle power supply device according to claim 1, wherein,
when the vehicle is one of in acceleration and in constant-speed driving,
if a lower-limit discharge voltage of the power storage part is lower than a storage part voltage of the power storage part with the lower-limit discharge voltage being determined from vehicle speed "v" of the vehicle based on a predetermined correlation between the vehicle speed "v" and the lower-limit discharge voltage,
the control part controls the DC/DC converter such that the regenerative electric power of the power storage part is supplied to the load until the storage part voltage reaches the lower-limit discharge voltage.

4. The vehicle power supply device according to claim 1, wherein,
at starting to use the vehicle, the control part determines deterioration of the main power supply based on a minimum value of a main power supply voltage of the main power supply when the starter is driven on the electric power of the main power supply.

5. The vehicle power supply device according to claim 1, wherein,
when the main power supply is deteriorated,
the control part drives the starter both on the electric power of the main power supply and on electric power of the power storage part such that the starter initially starts the engine, with the first switch being turned OFF and the second switch being turned ON before the engine is initially started.

6. The vehicle power supply device according to claim 5, wherein,
before the engine is initially started, if a storage part voltage of the power storage part is lower than a predetermined initial voltage with the storage part voltage being sensed by the control part,
the control part controls the DC/DC converter such that the electric power of the main power supply is charged into the power storage part until the storage part voltage reaches the predetermined initial voltage, with the first switch being turned ON and the second switch being turned OFF in advance.
